# EUROPÄISCHE PATENTANMELDUNG

(11) **EP 1 209 118 A1**
(43) Veröffentlichungstag der Anmeldung: **29.05.2002**
(21) Anmeldenummer: 00127077.6
(22) Anmeldetag: 11.12.2000
(51) Int. Cl.: B66C 23/36, B66C 23/62, B66C 23/78, E02F 9/02, E02F 9/08, B62D 55/04

(54) **Untergestell und Fahrwerk für einen Unterwagen eines fahrbaren Arbeitsgerätes**

(30) Priorität: 22.11.2000 DE 20019888 U
(71) Anmelder: Karl Schaeff GmbH & Co. Maschinenfabrik, 74595 Langenburg (DE)
(72) Erfinder: Schaeff, Hans, 74595 Langenburg (DE)
(74) Vertreter: Hössle, Markus, Dipl.-Phys.

(57) **Zusammenfassung**

Untergestell für einen Unterwagen (30) eines fahrbaren Arbeitsgerätes (1), mit verstellbaren Abstützeinrichtungen (32, 33) zum Abstützen des Untergestells (31) auf einem Untergrund, wobei Verbindungsmittel zum lösbaren Anbringen oder Austauschen eines Fahrwerks (40, 50) im abgestützten Zustand des Untergestells (31) vorgesehen sind. Fahrbares Arbeitsgerät mit einem Aufbau aus einem Arbeitsgerätemodul und einem Fahrwerkmodul nach Art eines Baukastensystems, wobei das Arbeitsgerätemodul einen Oberwagen (20) des Arbeitsgeräts sowie ein Untergestell (31) und das Fahrwerkmodul ein an dem Untergestell (31) lösbar angeordnetes Fahrwerk (40, 50) umfaßt. Verfahren zur Montage eines fahrbaren Arbeitsgerätes (1), bei dem zunächst ein Untergestell (31) mit verstellbaren Abstützeinrichtungen (32, 33) zum Abstützen des Untergestells (31) auf einem Untergrund bereitgestellt wird, auf dem ein Oberwagen (20) des Arbeitsgerätes montiert wird, wobei zu einem beliebigen Zeitpunkt nach der Bereitstellung des Untergestells (31) ein Fahrwerk (40, 50) an dem Untergestell (31) austauschbar angebracht wird.

## Beschreibung

Die vorliegende Erfindung betrifft ein Untergestell für einen Unterwagen eines fahrbaren Arbeitsgerätes und ein Fahrwerk zum Anbringen an ein derartiges Untergestell sowie ein fahrbares Arbeitsgerät mit einem derartigen Untergestell und Fahrwerk. Des weiteren betrifft die vorliegende Erfindung ein Verfahren zur Montage eines fahrbaren Arbeitsgerätes.

Fahrbare Arbeitsgeräte gibt es in einer Vielzahl von unterschiedlichen Ausführungen, beispielsweise als Kräne, Bagger, Rammen oder Umschlaggeräte. Die Fahrwerke solcher Arbeitsgeräte sind üblicherweise in Form von Radfahrwerken oder Raupenfahrwerken ausgebildet. Die Entscheidung für den Einsatz eines Arbeitsgerätes mit Radfahrwerk oder eines Arbeitsgerätes mit Raupenfahrwerk richtet sich nach den Einsatzbedingungen bzw. der Aufgabenstellung und hängt insbesondere von der Tragfähigkeit und der Beschaffenheit der Oberfläche des Untergrundes ab. Mitunter stellt sich die richtige Wahl aber auch erst an der Einsatzstelle heraus. Bauunternehmen müssen deshalb einen entsprechend umfangreichen Gerätepark unterhalten, um Arbeitsgeräte für die unterschiedlichen Einsatzbedingungen bereitstellen zu können.

Der Gerätehersteller wiederum sollte in der Lage sein, Arbeitsgeräte sowohl mit Radunterwagen als auch mit Raupenunterwagen, also z.B. einen Raupenkran und einen Rad- bzw. sogenannten Mobilkran kurzfristig liefern zu können. Für eine schnelle Auftragsfertigung bzw. ein rasches Reagieren auf kurzfristige Auftragsänderungen sind die Gerätehersteller somit gezwungen eine entsprechende Vorratshaltung von beiden Sorten von Unterwagen zu betreiben. Diese Vorratshaltung ist insbesondere bei Großgeräten mit sehr hohen Kosten verbunden. Wird andererseits erst nach Auftragseingang mit der Fertigung der Unterwagen begonnen, so bedingt dieses lange Lieferzeiten.

Demgegenüber wird erfindungsgemäß ein Untergestell für ein fahrbares Arbeitsgerät mit den Merkmalen des Anspruchs 1, ein Fahrwerk mit den Merkmalen des Anspruchs 6 sowie ein fahrbares Arbeitsgerät mit den Merkmalen des Anspruchs 10 vorgeschlagen. Des weiteren wird ein Verfahren zur Montage eines fahrbaren Arbeitsgeräts mit den Merkmalen des Anspruchs 13 vorgeschlagen.

Demnach umfaßt ein erfindungsgemäßes Untergestell für einen Unterwagen eines fahrbaren Arbeitsgerätes verstellbare Abstützeinrichtungen zum Abstützen des Untergestells auf einem Untergrund, wobei Verbindungsmittel zum lösbaren Anbringen oder Austauschen eines Fahrwerks im abgestützten Zustand des Untergestells vorgesehen sind. Diese erfindungsgemäße Ausgestaltung eröffnet in vorteilhafter Art und Weise die Möglichkeit, das Fahrwerk eines fahrbaren Arbeitsgerätes jederzeit auszutauschen, d.h. mit einem erfindungsgemäßen Untergestell ausgerüstete fahrbare Arbeitsgeräte können einfach und schnell je nach Bedarf mit einem geeigneten Fahrwerk, insbesondere Radfahrwerk oder Raupenfahrwerk, ausgestattet werden. Der Gerätehersteller wird entlastet, da er keine Vorratshaltung von kompletten Arbeitsgeräten mit Radunterwagen oder Raupenunterwagen mehr betreiben muß. Vielmehr wird eine flexible Auftragsfertigung erreicht, wobei das Untergestell bzw. das Arbeitsgerät erst dann mit dem entsprechenden Fahrwerk versehen wird, wenn feststeht, welches Fahrwerk der Abnehmer benötigt, was in der Regel gegen Ende der Montage der Fall sein wird. Eine Entscheidung über die Art des gewünschten Fahrwerkes muß somit nicht bereits bei Auftragserteilung vorliegen, sondern kann auch zu einem deutlich späteren Zeitpunkt erfolgen. Da die Herstellung eines Rad- bzw. Raupenfahrwerkes für sich bzw. dessen Montage weniger Aufwand und Zeit als die Fertigung eines gesamten Rad- bzw. Raupenunterwagens erfordert, bedarf es gar keiner oder nur einer geringen Vorratshaltung an Rad- bzw. Raupenfahrwerken. Aufgrund des geringeren Aufwandes der Fahrwerksfertigung ist eine solche Vorratshaltung auch mit deutlich verringerten Kosten verbunden. Da die Fahrwerke jederzeit, also auch nach Fertigstellung der Arbeitsgeräte austauschbar sind, können auch Auftragsänderungen hinsichtlich des Fahrwerkwunsches ohne weiteres berücksichtigt werden.

Seitens des Herstellers können zudem zusätzliche Spezialfahrwerke angeboten werden, die eine bessere Anpassung an unterschiedliche Einsatzbedingungen ermöglichen. Aufgrund der deutlichen geringeren Kosten für ein zusätzliches Fahrwerk verglichen mit den Kosten eines Gesamtsystems sind feinere Fahrwerkspezifizierungen als die relativ grobe Einteilung in Rad- und Raupenfahrwerke wirtschaftlich vertretbar. Beispielsweise kann ein Radfahrwerk speziell für große Überführungsdistanzen ausgelegt sein, das dann am Einsatzort gegen ein Radfahrwerk mit besseren Geländefähigkeiten ausgetauscht wird.

Anwender von Arbeitsgeräten, wie Bauunternehmen, müssen nicht mehr gleiche Arbeitsgeräte sowohl in einer Radfahrwerk- als auch in einer Raupenfahrwerkausführung erwerben, sondern können sich auf das jeweilige Arbeitsgerät mit einem separaten Raupenfahrwerk und Radfahrwerk beschränken. Dadurch kann der Umfang der Geräteparks erheblich reduziert werden, da unterschiedliche Fahrwerksarten eines Arbeitsgerätes nicht mehr als Auswahlkriterien für den Einsatz zu berücksichtigen sind. Dieser Vorteil gilt auch für Vermieter von Arbeitsgeräten.

Da die Fahrwerke der erfindungsgemäßen Arbeitsgeräte jederzeit austauschbar sind, kann auf Änderungen der Einsatzbedingung schnell reagiert werden. Gegebenenfalls können die Fahrwerke der erfindungsgemäßen Arbeitsgeräte auch auf der Baustelle ausgetauscht werden.

Anwendern wird es zudem ermöglicht, ein benötigtes Fahrwerk für das jeweilige Arbeitsgerät aber auch erst bei Bedarf kurzfristig zu bestellen. Wegen des relativ geringen Fertigungsaufwandes für ein solches separates Fahrwerk können solche Aufträge dann auch kurzfristig abgewickelt werden.

An dem erfindungsgemäßen Untergestell sind verstellbare Abstützeinrichtungen vorgesehen, mit denen das Untergestell derart gegen einen Untergrund abstützbar ist, daß ein Fahrwerk gegen ein anderes Fahrwerk ausgetauscht werden kann. Die Ausgestaltung eines hinsichtlich des Fahrwerks universellen erfindungsgemäßen Untergestells mit Abstützmitteln ermöglicht eine vorteilhafte Herstellung von fahrbaren Arbeitsgeräten, bei der das Arbeitsgerät zunächst ohne Fahrwerk auf den Abstützeinrichtungen stehend montiert wird. Die Arbeitsgeräte können folglich in einem wesentlichen Umfang, insbesondere einschließlich der aufwendigen Oberwagenmontage, vorgefertigt werden, ohne daß dazu ein vorgefertigter Unterwagen benötigt wird. Dadurch werden Kosten gespart und die Herstellung aufgrund des am Ende des Herstellungsverfahrens anzubringenden Fahrwerks flexibler gestaltet, da die Arbeitsgeräte nicht schon am Beginn des Herstellungsprozesses durch die Fahrwerkswahl festgelegt werden.

Der Transport bzw. das Ausrichten des gegenüber dem Oberwagen leichten Fahrwerkes läßt sich mit relativ geringem Geräteaufwand bewerkstelligen. Ein Fahrwerkwechsel läßt sich somit auch auf Baustellen und weitgehend ohne die Verwendung weiterer Geräte oder Fahrzeuge durchführen. Nicht eingesetzte Arbeitsgeräte können bis zu ihrer Verwendung beispielsweise im Gerätepark oder auf der Baustelle auf den Abstützeinrichtungen gelagert werden, ohne daß für die Lagerung Fahrwerke bereitzustellen sind.

Bei Bedarf kann ein Fahrwerk auch unlösbar mit dem Untergestell verbunden werden, wenn feststeht, daß ein Fahrwerkwechsel nicht mehr erforderlich ist. Dadurch wird zwar ein späterer Fahrwerkwechsel ausgeschlossen, der logistische Herstellungsvorteil einer späten Fahrwerksfestlegung bleibt davon jedoch unberührt. Die Arbeitsgeräte können beispielsweise bei Bedarf oder auf Wunsch am Ende oder bereits während des Herstellungsprozesses mit einem nicht lösbaren bzw. nicht austauschbaren Fahrwerk versehen werden. Eine solche nicht lösbare Verbindung von Untergestell und Fahrwerk kann auf einfache Art und Weise durch zumindest teilweises Ersetzen von lösbaren Verbindungsmitteln wie Schraubverbindungen durch Schweißverbindungen bzw. durch zusätzliche Schweißverbindungen erzielt werden. Die erfindungsgemäßen Arbeitsgeräte können folglich bereits bei Fertigstellung der Herstellung, also zum Zeitpunkt der Auslieferung, mit einem nicht austauschbaren Fahrwerk ausgestattet sein.

Bei einer vorteilhaften Ausführungsform ist das Untergestell aus einem im wesentlichen umlaufenden Kastenträger gebildet, der durchlaufende Leisten/Flanschen aufweist, die Teile der Verbindungsmittel sind und an denen das Fahrwerk mit Befestigungsmitteln befestigt wird, wobei die Leisten im Bereich der Fahrwerksbefestigung durch Knotenbleche abgestützt sind. Eine solche Ausgestaltung ermöglicht eine kompakte und kostengünstige Bauweise. Außerdem lassen die Leisten an der Unterseite des Kastenprofils einen Freiraum entstehen, in dem Elektro- und Hydraulikleitungen geschützt verlegt werden können.

Bei einer weiteren vorteilhaften Ausgestaltung der Erfindung sind am Untergestell Mittel zum Anschließen und/oder Hindurchführen von Anschlußteilen von Fahrwerkskomponenten zum Steuern und/oder Antreiben des Fahrwerkes vorgesehen. Die Anschlußteile sind beispielsweise elektrische und/oder hydraulische Leitungen bzw. Stecker/Kupplungen und mechanische Verbindungen wie Gestänge, Getriebe, Kupplungen und dergleichen, die über die vorstehenden Mittel am Untergestell angeschlossen oder durch das Untergestell zum Anschließen entsprechende Anschlüsse im Oberwagen hindurchgeführt werden. Dadurch wird gewährleistet, daß beim Anbringen bzw. Austausch eines Fahrwerkes die Energieversorgung der Fahrwerke, die Verbindung mit der Antriebsquelle, dem Hydrauliksystem und elektrischen Einrichtungen des Oberwagens bzw. zu den Bedienelementen der Fahrerkabine des Arbeitsgerätes schnell und mit relativ geringem Aufwand hergestellt werden können. Diese Mittel zum Anschließen und/oder Hindurchführen können für unterschiedliche Fahrwerktypen genormt ausgestaltet sein und Schnellschlußverbindungen, beispielsweise aus Stecker, Kupplungen, Bajonettverschlüssen oder dergleichen bestehend, umfassen. Sie können außerdem auch mit den Verbindungsmitteln zum Anbringen des Fahrwerkes an das Untergestell kombiniert sein, so daß beim Anbringen eines Fahrwerks gleichzeitig die vorstehend genannten Verbindungen geschaltet werden.

In vorteilhafter Weiterbildung der Erfindung sind am Fahrwerk Anschluß-/Übertragungseinrichtungen von Fahrwerkskomponenten zum Steuern und/oder Antreiben des Fahrwerkes angeordnet, die an Systeme eines Oberwagens eines Arbeitsgerätes angeschlossen werden, bei unterschiedlichen Fahrwerktypen im wesentlichen gleich ausgeführt. Dadurch wird eine Vereinheitlichung der Konfiguration der Anschlüsse eines Fahrwerkes, die mit dem Untergestell bzw. dem Oberwagen verbunden werden, erzielt. Dies ermöglicht eine modulare Gestaltung eines fahrbaren Arbeitsgeräts und vereinfacht das Anbringen eines Fahrwerkes an das Untergestell.

Bei einer vorteilhaften Ausgestaltung der Erfindung sind am Fahrwerk hydrostatische Antriebsmittel als Fahrwerksantrieb vorgesehen. Bei einer solchen Ausgestaltung erreicht man einen hohen Vereinheitlichungsgrad der in Oberwagen und Untergestell angeordneten Komponenten für das Fahrwerk, insbesondere der Hydraulikinstallation, hinsichtlich der Verwendung mit unterschiedlichen Fahrwerken.

In vorteilhafter Weiterbildung der Erfindung ist das erfindungsgemäße fahrbare Arbeitsgerät nach Art eines Baukastensystems aus einem Arbeitsgerätemodul und einem Fahrwerkmodul aufgebaut, wobei das Arbeitsgerätemodul wenigstens den Oberwagen und das Untergestell und das Fahrwerkmodul wenigstens ein Fahrwerk umfaßt. Arbeitsgerätemodul und Fahrwerkmodul sind über die Verbindungsmittel verbunden. Durch den modulhaften Aufbau wird eine weitere Flexibilisierung bei der Herstellung und im Einsatz erzielt. Unterschiedliche Fahrwerke bzw. Fahrwerkmodule sind nicht nur für das eine jeweilige Arbeitsgerät bestimmt, sondern können mit unterschiedlichen Arbeitsgeräten kombiniert werden. Dadurch wird die Anzahl der bereitzustellenden Fahrwerke weiter reduziert und Kosten eingespart.

Ein erfindungsgemäßes Verfahren zur Montage eines fahrbaren Arbeitsgeräts umfaßt zunächst den Schritt, ein Untergestell mit verstellbaren Abstützeinrichtungen zum Abstützen des Untergestells auf einem Untergrund bereitzustellen, auf dem ein Oberwagen des Arbeitsgeräts montiert wird, wobei ein Fahrwerk zu einem beliebigen Zeitpunkt nach der Bereitstellung des Untergestells an dem Untergestell austauschbar angebracht wird.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in den Zeichnungen schematisch dargestellt und wird im folgenden unter Bezugnahme auf die Zeichnungen ausführlich beschrieben.
- Figur 1: zeigt in Seitenansicht ein erfindungsgemäßes Untergestell mit einem Oberwagen eines fahrbaren Arbeitsgerätes ohne Fahrwerk.
- Figur 2: zeigt in Seitenansicht das Untergestell mit Oberwagen der Figur 1 mit angebrachtem Raupenfahrwerk.
- Figur 3: zeigt in Seitenansicht das Untergestell mit Oberwagen der Figur 1 mit angebrachtem Radfahrwerk.
- Figur 4: zeigt eine Vorderansicht des erfindungsgemäßen Arbeitsgerätes der Figur 2.
- Figur 5: zeigt eine Vorderansicht des erfindungsgemäßen Arbeitsgerätes der Figur 3.
- Figur 6: zeigt einen Querschnitt durch das erfindungsgemäße Untergestell der Figur 3 und eine an dem Untergestell angebrachte Pendelachse entlang der Schnittlinie VI-VI.
- Figur 7: zeigt einen Querschnitt durch das erfindungsgemäße Untergestell der Figur 2 und einen an dem Untergestell angebrachten Raupenquerträger entlang der Schnittlinie VII-VII.

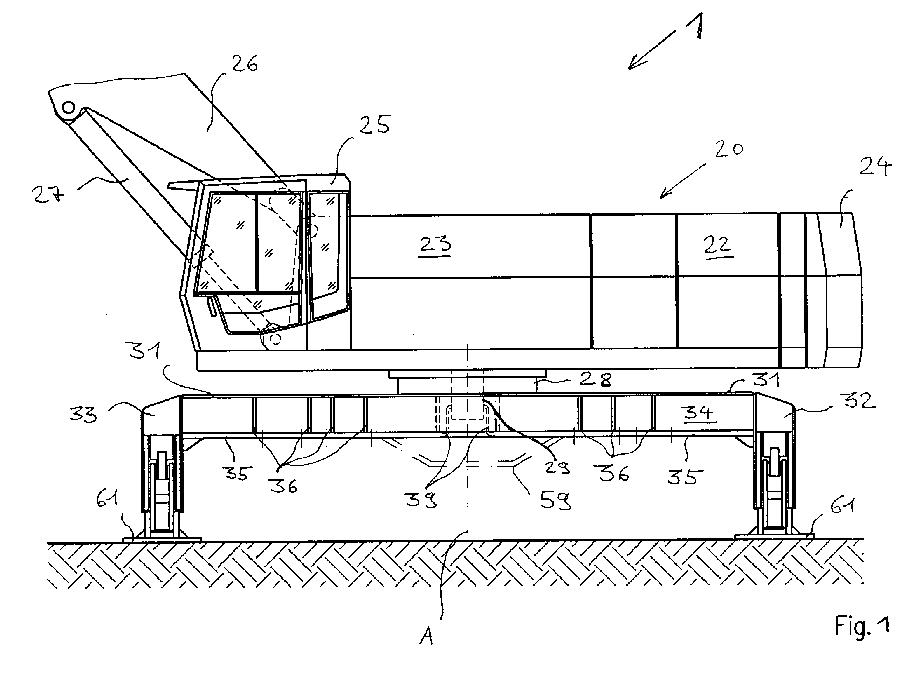

Eine bevorzugte Ausführungsform der Erfindung ist in den Figuren 1 bis 7 gezeigt, in denen gleiche Komponenten mit gleichen Bezugszeichen bezeichnet sind.

Figur 1 zeigt in Seitenansicht ein erfindungsgemäßes Untergestell 31 mit einem Oberwagen 20 eines Arbeitsgerätes 1, wobei der Oberwagen 20 beispielhaft in Form eines Baggers ausgeführt ist.

Der Oberwagen 20 trägt üblicherweise eine (dargestellte) Arbeitsvorrichtung, die an einem andeutungsweise dargestellten Auslegersystem 26 mit Hubzylinder 27 angebracht ist. Das fahrbare Arbeitsgerät kann mit verschiedensten Arten von Arbeitsvorrichtungen bzw. Auslegersystemen ausgerüstet sein. Der Oberwagen 20 umfaßt einen Raum 23 für Hydraulikkomponenten, wie Pumpen, Hydrauliksteuermittel und dergleichen, einen Motorraum 22 mit einem Antriebsmotor, beispielsweise einen Dieselmotor, sowie eine Kabine 25, in der Bedienungselemente zum Steuern des Arbeitsgerätes 1 angeordnet sind, und an einem dem Auslegersystem 26 gegenüberliegend angeordnetes Gegengewicht 24.

Der Oberwagen 20 ist um eine strichpunktiert dargestellte senkrechte Achse A mittels eines Drehlagers 28 drehbar an dem erfindungsgemäßen Unterwagen 31 befestigt. Die Erfindung ist jedoch nicht auf derartige drehbare Verbindungen beschränkt. So ist es beispielsweise möglich, das Untergestell lösbar oder auch fest mit dem Oberwagen zu verbinden und gegebenenfalls nur Teile des Aufbaus des Oberwagens dreh- oder verstellbar auszubilden.

Das erfindungsgemäße Untergestell 31 ist als ein Kastenträger 34 ausgeführt. Der Kastenträger 34 ist bevorzugt aus einem im wesentlichen geschlossenen Rechteckprofil aus geschweißten und gekanteten Blechen gefertigt. Ein solches geschlossenes Profil kann die Drehkräfte, die vom Oberwagen 20 über das Drehlager 28 auf das Untergestell 31 übertragen werden, besonders gut aufnehmen. Der Kastenträger 34 ist als ein gleichmäßiges, von einer vorderen Abstützeinrichtung 32 bis zu einer hinteren Abstützeinrichtung 33 durchlaufendes Profil ausgeführt. Bei Bedarf kann das Kastenprofil 34 auch im Mittenbereich, in dem in bestimmten Fällen aufgrund der über das Drehlager 28 aufgebrachten Lasten größere Biegemomente auftreten können, verstärkt sein. Eine solche, nach unten gezogene Kastenträgerverstärkung 59 ist mit gestrichelten Linien angedeutet.

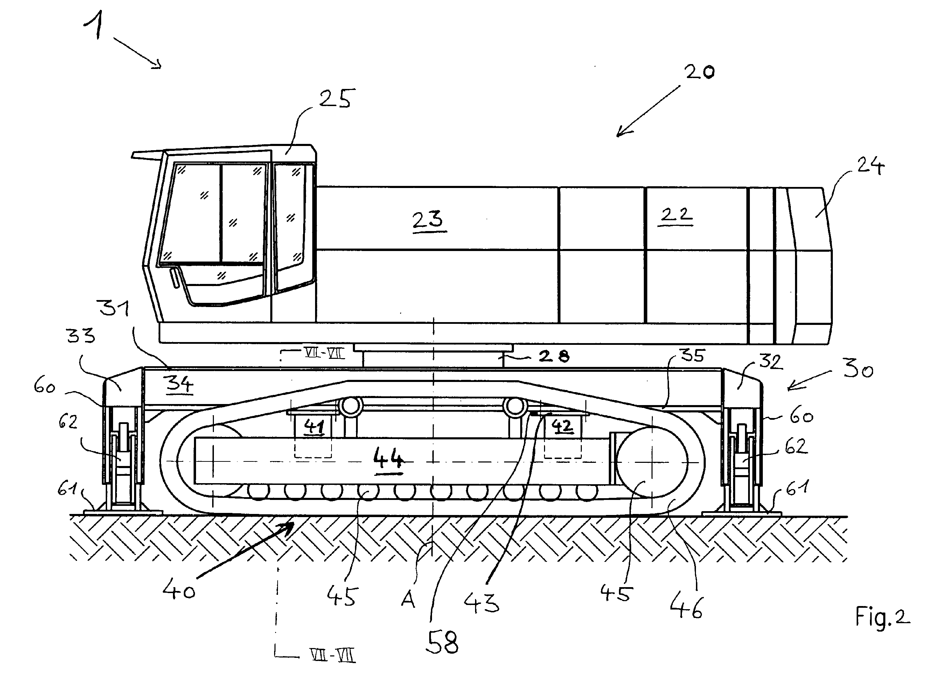

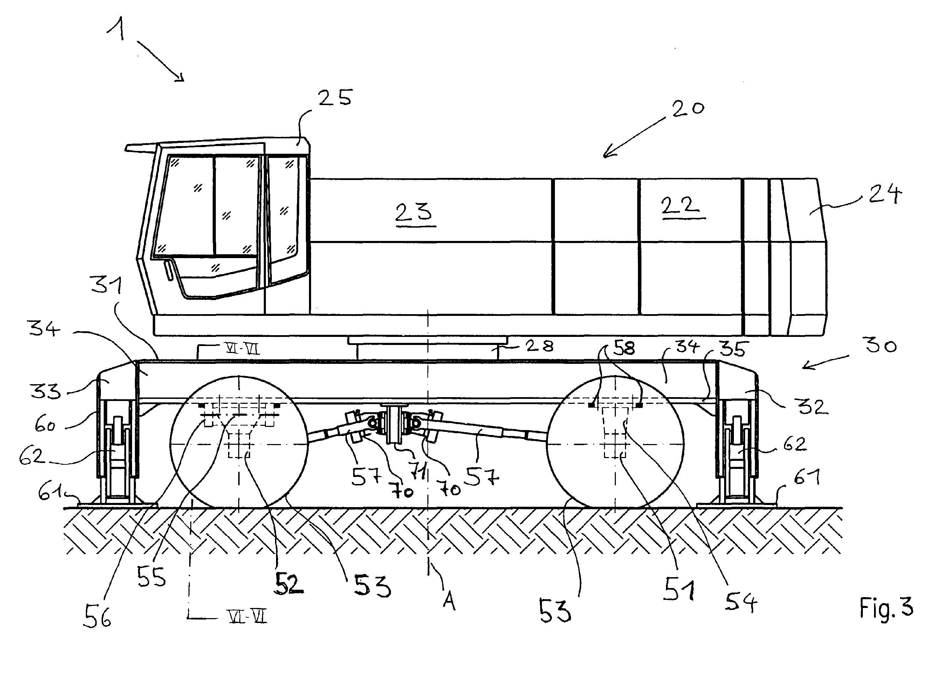

Der Kastenträger 34 ist im wesentlichen allseitig geschlossen und weist lediglich im Bereich des Drehlagers 28 eine Öffnung mit entsprechenden Verstärkungen für eine Drehdurchführung 29 und zugeordnete Leitungen 39 auf, über die ein in den Figuren 2 und 3 dargestelltes Fahrwerk 40, 50 und Abstützeinrichtungen 32, 33 insbesondere mit dem Hydrauliksystem und der Elektrik des Oberwagens 20 verbunden sind. An der Unterseite des Kastenträgers 34 sind sich in Längsrichtung erstreckende Flansche bzw. Leisten 35 vorgesehen, die der Befestigung des in Figur 2 und 3 gezeigten Fahrwerkes 40, 50 an dem Untergestell 31 dienen. Die Leisten bzw. Flansche 35 können mit dem Kastenträger 34 verschweißt oder auch integral mit diesem ausgebildet sein. Die Leisten 35 sind im Bereich der Befestigung mit dem Fahrwerk 40, 50 durch Knotenbleche 36 abgestützt.

Die Figuren 2 und 3 zeigen ein komplettes erfindungsgemäßes fahrbares Arbeitsgerät 1, das grundsätzlich aus einem Oberwagen 20 und einem Unterwagen 30 aufgebaut ist.

Der Aufbau des Oberwagens 20 der Figuren 2 und 3 entspricht dem des in Figur 1 dargestellten und vorstehend beschriebenen Oberwagens 20.

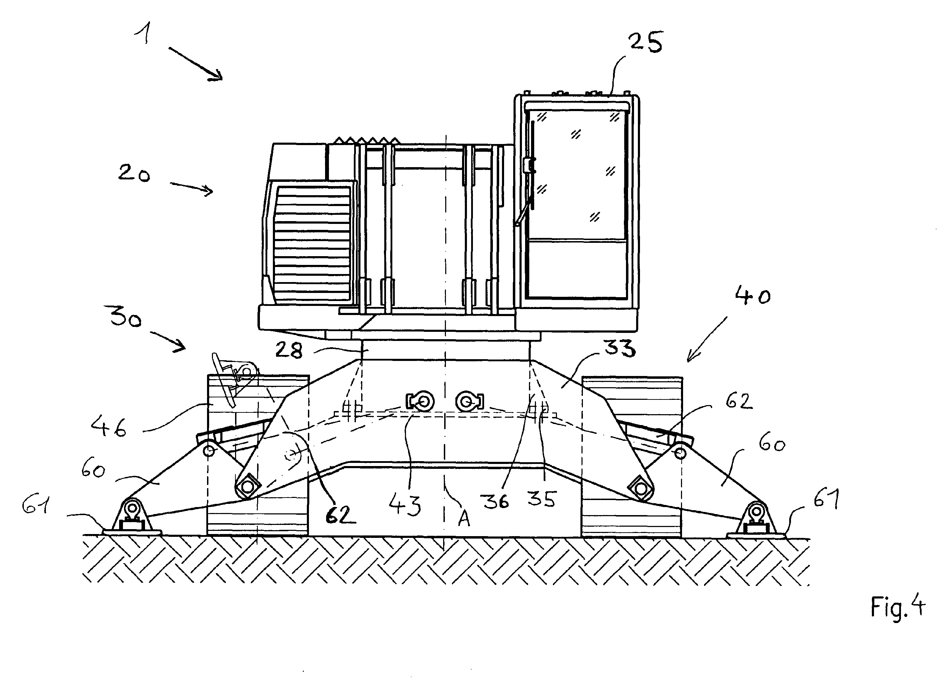

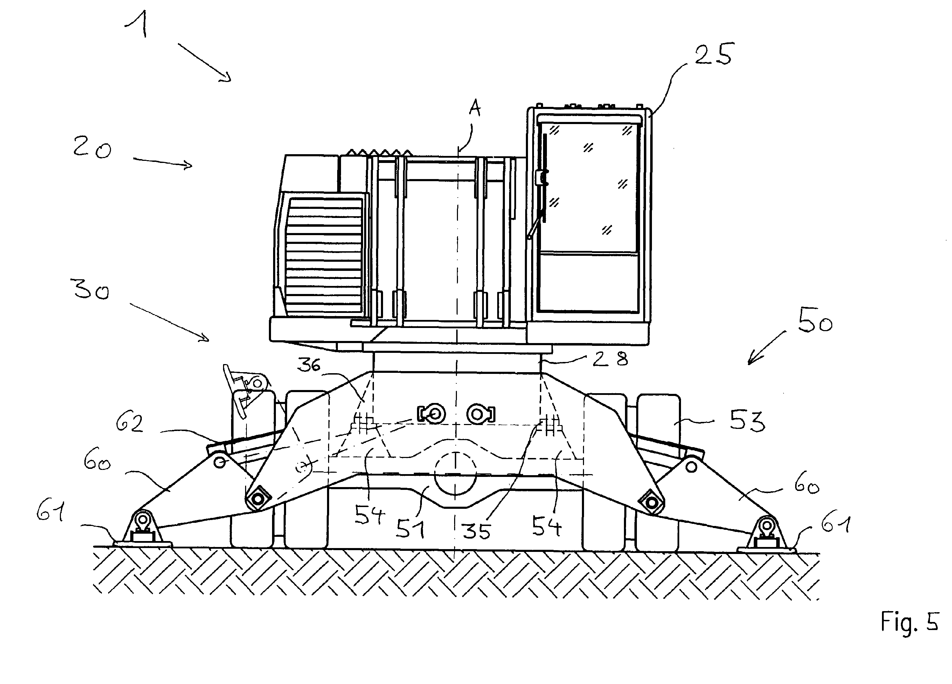

Der Unterwagen 30 besteht aus dem erfindungsgemäßen Untergestell 31 und einem Fahrwerk. Als Fahrwerke können verschiedene Arten von Fahrwerken, wie ein in den Figuren 2 und 4 gezeigtes Raupenfahrwerk 40 oder ein in den Figuren 3 und 5 gezeigtes Radfahrwerk 50 zum Einsatz kommen.

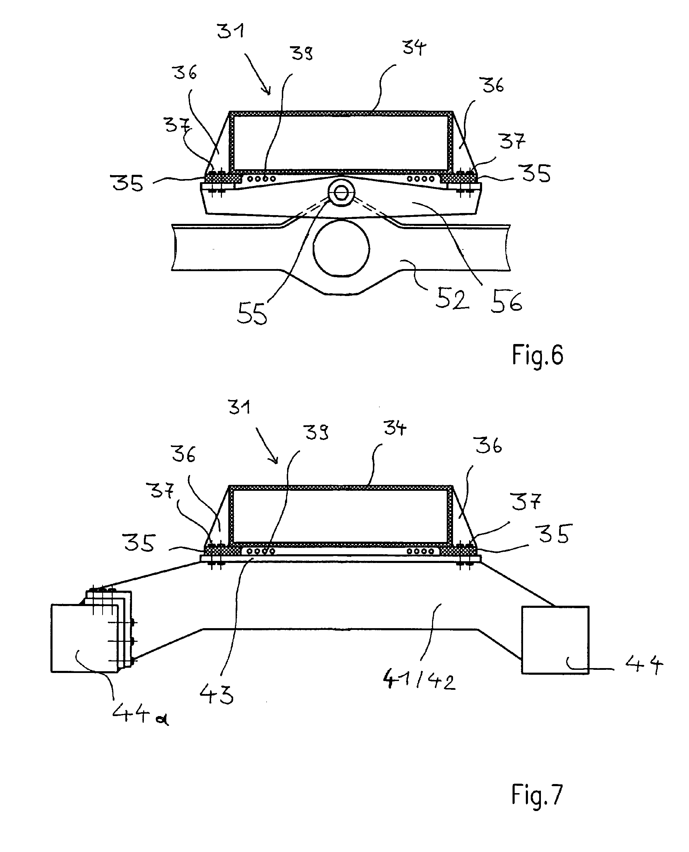

Das in den Figuren 2 und 4 dargestellte Raupenfahrwerk 40 besteht im wesentlichen aus sogenannten Raupenschiffen 44, die über Querträger 41, 42 miteinander verbunden sind. Das Raupenschiff 44 ist in bekannter Weise mit den Querträgern 41, 42 verschweißt. Die Verbindung von Raupenschiff 44 und Querträgern 41, 42 kann jedoch auch demontierbar oder verstellbar ausgestaltet sein, um bei Straßentransporten mit einem Tieflader eventuelle Überbreiten des Raupenfahrwerkes 40 zu vermeiden. In Figur 7 ist beispielhaft ein mit den Querträgern 41, 42 verschraubtes Raupenschiff 44a dargestellt.

An den Raupenschiffen 44 sind verschiedene Arten von Rollen 45, wie Lauf- und Stützrollen sowie Führungs- und Antriebsrollen, zum Führen bzw. Antreiben einer Raupenkette 46 angebracht. Im Raupenfahrwerk 40 sind weiterhin (nicht dargestellte) Mittel zum Übertragen des Antriebsmomentes des Antriebsmotors des Oberwagens 20 sowie entsprechende Lenksteuervorrichtungen und Bremsvorrichtungen integriert. Das Antriebsmoment für den Fahrbetrieb wird grundsätzlich durch den Antriebsmotor erzeugt, vorzugsweise jedoch hydraulisch auf das Fahrwerk 40 übertragen. Dazu sind (nicht dargestellte) hydrostatische Antriebsmittel, wie ein Hydromotor, vorgesehen. Der Hydromotor ist über die Durchführung 29 und Hydraulikleitungen 39 an das Hydrauliksystem des Oberwagens 20 angeschlossen und wird hydraulisch angetrieben. Es können aber auch andere Antriebssysteme vorgesehen sein, wie beispielsweise ein Fahrwerkantrieb mit Elektromotoren, die über ein Motor-Generatorsystem mit Energie versorgt werden, oder Getriebemittel, die das mechanische Antriebsmoment des Motors aus dem Oberwagen 20 auf das Fahrwerk 40 übertragen.

Das in den Figuren 2 und 5 dargestellte Radfahrwerk ist als ein zweiachsiges Fahrwerk ausgeführt. Es können jedoch auch Radfahrwerke mit mehr als zwei Achsen verwendet werden. Das Radfahrwerk 50 umfaßt eine Starrachse 51 und eine Pendelachse 52, die die Räder 53 tragen. Die Starrachse 51 ist durch Achsböcke 54 abgestützt. Die Pendelachse 52 ist mit ihrem Pendellagerauge 55 in einem Pendelblock 56 gelagert. Das Antriebsmoment wird über Kardanwellen 57 auf die Räder 53 übertragen. Die Kardanwellen sind mit hydrostatischen Antriebsmitteln, wie einem Hydromotor 70 mit Getriebe 71, verbunden. Es sind aber auch andere Antriebskonzepte möglich, beispielsweise die bei der Beschreibung des Raupenfahrwerkes 40 erläuterten Antriebskonzepte. Das Radfahrwerk 50 umfaßt weiterhin (nicht dargestellte) Fahrwerkskomponenten, wie Lenksteuer- und Bremssteuereinrichtungen.

Das Radfahrwerk 50 und das Raupenfahrwerk 40 sind mit dem erfindungsgemäßen Untergestell 31 über Verbindungsmittel derart verbunden, daß die Fahrwerke 40, 50 jederzeit ausgetauscht werden können. Die (nicht dargestellten) Fahrwerkskomponenten zum Abtreiben und Steuern des Fahrwerkes, wie Lenksteuergeräte, Bremseinrichtungen und hydrostatische Antriebsmittel, sind vorteilhafterweise weitgehend vereinheitlicht, so daß die Elektro- und/oder Hydraulikinstallation bzw. entsprechende Anschluß- und Befestigungsmittel für die Fahrwerkskomponenten in Oberwagen 20 und Untergestell 31 im wesentlichen ohne Änderungen mit einem Radfahrwerk 50 oder einem Raupenfahrwerk 40 verbunden werden können.

Unter Bezugnahme auf die Figuren 6 und 7 wird nachfolgend beschrieben, wie das Fahrwerk 40, 50 am erfindungsgemäßen Untergestell 31 angebracht ist.

Die Figuren 6 und 7 zeigen einen Querschnitt durch das Untergestell 31 entlang der Linie VI-VI der Figur 3 bzw. der Linie VII-VII der Figur 2. In der dargestellten Ausführungsform ist das Fahrwerk 40, 50 an dem Untergestell 31 grundsätzlich durch Verbindungsmittel in Form einer Schraubverbindung 37 lösbar befestigt. Die Erfindung ist aber nicht auf Verbindungsmittel nach Art von Schraubverbindungen begrenzt. Vielmehr ist allgemein durch lösbaren Verbindungsmittel, die hinsichtlich einer Austauschbarkeit von unterschiedlichen Fahrwerken ausgestaltet sind, gewährleistet, daß die Fahrwerke jederzeit, je nach Einsatzbedingungen und gegebenenfalls auch am Einsatzort, mit relativ geringem Aufwand ausgetauscht werden können.

Im einzelnen sind das Fahrwerk 40, 50 und das Untergestell 31 über Schraubverbindungen 37 miteinander verbunden, die zwischen den Leisten 35 des Untergestells 31 und den Achsböcken 54 einer Starrachse 51 bzw. den Pendelblock 56 einer Pendelachse 52 sowie zwischen den Leisten 37 und Schraubplatten 43 der Raupenquerträger 41, 42 ausgebildet sind. Zusätzlich zu den Verschraubungen 37 können Schubnocken bzw. Paßstifte 58 vorgesehen sein, die einer Entlastung der Schraubverbindung 37 dienen. Zum Sichern der Schraubverbindungen 37 gegen ein unbeabsichtigtes Lösen der Verbindung sind (nicht dargestellte) Sicherheitselemente, beispielsweise Sicherungsbolzen, vorgesehen. Die Schraubverbindungen 37 sind in einem gegenüber dem Kastenträger 34 vorstehenden Bereich der Leisten 35 vorgesehen, so daß eine leichte Zugänglichkeit der Verbindung für den Fahrwerkwechsel gewährleistet ist. In Figur 6 ist speziell die Befestigung einer Pendelachse 32 mittels Pendelbock 35 und Pendelauge 34 an der Schraubleiste 35 gezeigt, während in Figur 7 die Befestigung der Raupenquerträger 41, 42 an der Schraubleiste 35 dargestellt ist. Die Befestigung einer Starrachse 51 mittels zweier Achsböcke 54 ist in der Figur 4 in gestrichelten Linien dargestellt.

Anhand der Figuren 1 bis 5 werden nachfolgend Abstützeinrichtungen 32, 33, die insbesondere bei entferntem Fahrwerk 40, 50 zum Abstützen des erfindungsgemäßen Untergestells 31 bzw. des Arbeitsgerätes 1 dienen, näher erläutert.

Wie in Figur 1 gezeigt ist, sind beidseitig ausgebildete Abstützeinrichtungen 32, 33 vorgesehen, wobei hintere Abstützeinrichtungen 32 und vordere Abstützeinrichtungen 33 an den vorderen und hinteren Endabschnitten des Untergestells 31 befestigt sind. Die Abstützeinrichtungen 32, 33 werden hydraulisch betätigt und stützen das Untergestell samt Oberwagen so gegen den Boden ab, daß das Fahrwerk 40, 50 für einen Fahrwerkwechsel frei zugänglich wird, d.h. vom Boden abgehoben wird. Die Abstützeinrichtungen 32, 33 erhöhen die Flexibilität beim Wechsel der Fahrwerke 40, 50, da das Untergestell 31 samt Oberwagen 20 jederzeit ohne zusätzliche Mittel oder Vorrichtungen selbsttätig abgestützt werden kann. Bei der Herstellung des erfindungsgemäßen fahrbaren Arbeitsgerätes ermöglichen die Abstützeinrichtungen 32, 33 in vorteilhafter Art und Weise eine Fertigmontage des Oberwagens 20 samt Arbeitsvorrichtungen/Auslegersystem ohne die Anbringung eines Fahrwerkes. Die Komplettierung des erfindungsgemäßen fahrbaren Arbeitsgerätes 1 mit einem entsprechenden Fahrwerk 40, 50 kann somit bedarfsgerecht am Schluß der Montage erfolgen.

Die Abstützeinrichtungen 32, 33 der Figuren 1 bis 5 sind als Pratzenabstützungen ausgeführt. Die Ausgestaltung der Pratzenabstützungen 32, 33 kann insbesondere den Vorderansichten des Arbeitsgerätes in den Figuren 3 und 4 entnommen werden.

Die Pratzenabstützungen 32, 33 umfassen um mehr als 90° verschwenkbare Pratzen 60, die mittels eines hydraulisch betriebenen Pratzenzylinders 62 verschwenkt und verriegelt werden kann. Durch Verschwenken der Pratzenzylinder 62 kann das Arbeitsgerät mittels der Bodenplatten 61 der Pratzenabstützungen 31, 32 gegen den Boden abgestützt werden. Dabei kann der Hydraulikdruck in den Pratzenzylinder 62 so eingestellt werden, daß das Arbeitsgerät sowohl durch das Fahrwerk als auch durch die Pratzenabstützungen 32, 33 gegen den Boden abgestützt wird. Dieses führt insbesondere bei einem Raupenfahrwerk 50 zu einer Minimierung des Bodendrukkes. An den Pratzenzylindern 62 sind weiterhin Sperrventile vorgesehen, die in bekannter Weise dafür sorgen, daß auch bei Überlast kein Hydrauliköl aus den Pratzenzylindern 62 austreten kann, wodurch ein unkontrolliertes Bewegen der Pratzenabstützungen 32, 33 verhindert wird.

Die Erfindung ist jedoch nicht auf die in den Figuren 1 bis 5 gezeigten Pratzenabstützungen beschränkt. An dem Untergestell 31 können vielmehr beliebige Abstützeinrichtungen oder deren Kombination vorgesehen sein, beispielsweise Teleskopabstützungen, die von Kranen her bekannt sind, und/oder Schildabstützungen, die häufig bei Planiergeräten eingesetzt werden.

## Patentansprüche

1. Untergestell für einen Unterwagen (30) eines fahrbaren Arbeitsgerätes (1), mit verstellbaren Abstützeinrichtungen (32, 33) zum Abstützen des Untergestells (31) auf einem Untergrund, wobei Verbindungsmittel (37, 35, 43) zum lösbaren Anbringen oder Austauschen eines Fahrwerks (40, 50) im abgestützten Zustand des Untergestells (31) vorgesehen sind.

2. Untergestell nach Anspruch 1, bei dem die Verbindungsmittel (37, 35, 43) am Fahrwerk (40, 50) und/oder Untergestell (31) ausgebildet sind.

3. Untergestell nach der Anspruch 1 oder 2, mit einem im wesentlichen umlaufenden Kastenträger (34), wobei die Verbindungsmittel sich im wesentlichen in Längsrichtung an dem Kastenträger (34) erstreckende Leisten (35) umfassen, die in zur Fahrwerkanbringung vorgesehenen Bereichen durch Knotenbleche (36) abgestützt sind.

4. Untergestell nach einem der Ansprüche 1 bis 3, bei dem 0Mittel zum Anschließen und/oder Hindurchführen von Anschlußteilen von Fahrwerkskomponenten zum Steuern und/oder Antreiben des Fahrwerkes (40, 50) vorgesehen sind.

5. Untergestell nach einem der Ansprüche 1 bis 4, bei dem die Verbindungsmittel (37, 35, 43) Schraubverbindungen umfassen.

6. Fahrwerk zum Anbringen an ein Untergestell (31) nach einem der Ansprüche 1 bis 5, mit fahrwerkseitigen Verbindungsmitteln (43), die mit Verbindungsmitteln (37, 35) des Untergestells (31) zum lösbaren Anbringen des Fahrwerks (40, 50) an dem Untergestell (31) zusammenwirken.

7. Fahrwerk nach Anspruch 6, wobei als Fahrwerk unterschiedliche Arten von Radfahrwerken (50) oder Raupenfahrwerken (40) vorgesehen sind.

8. Fahrwerk nach Anspruch 6 oder 7, bei dem Anschlußteile von Fahrwerkskomponenten zum Steuern und/oder Antreiben des Fahrwerkes (40, 50), die an Systeme eines Oberwagens eines Arbeitsgerätes angeschlossen werden, bei unterschiedlichen Fahrwerksarten im wesentlichen gleich ausgeführt sind.

9. Fahrwerk nach einem der Ansprüche 6 bis 8, bei dem als Fahrwerksantrieb hydrostatische Antriebsmittel vorgesehen sind.

10. Fahrbares Arbeitsgerät mit einem Aufbau aus einem Arbeitsgerätemodul und einem Fahrwerkmodul nach Art eines Baukastensystems, wobei das Arbeitsgerätemodul einen Oberwagen (20) des Arbeitsgeräts sowie ein Untergestell (31) und das Fahrwerkmodul ein an dem Untergestell (31) lösbar angeordnetes Fahrwerk (40, 50) umfaßt.

11. Fahrbares Arbeitsgerät mit einem Oberwagen (20) und einem Unterwagen (30), wobei der Unterwagen (30) ein Untergestell (31) nach einem der Ansprüche 1 bis 5 umfaßt.

12. Fahrbares Arbeitsgerät mit einem Oberwagen (20) und einem Unterwagen (30), dessen Unterwagen (30) ein Fahrwerk nach einem der Ansprüche 6 bis 9 umfaßt.

13. Verfahren zur Montage eines fahrbaren Arbeitsgerätes (1), bei dem zunächst ein Untergestell (31) mit verstellbaren Abstützeinrichtungen (32, 33) zum Abstützen des Untergestells (31) auf einem Untergrund bereitgestellt wird, auf dem ein Oberwagen (20) des Arbeitsgerätes montiert wird, wobei zu einem beliebigen Zeitpunkt nach der Bereitstellung des Untergestells (31) ein Fahrwerk (40, 50) an dem Untergestell (31) angebracht wird.

14. Verfahren nach Anspruch 13, **dadurch gekennzeichnet, daß** das Fahrwerk (40, 50) an dem Untergestell (31) austauschbare angebracht wird.
